(19)

Europäisches
Patentamt
European
Patent Office
Office européen
des brevets

(11)  **EP 4 044 388 A1**

(12)  **EUROPEAN PATENT APPLICATION**

(43) Date of publication:
**17.08.2022  Bulletin 2022/33**

(21) Application number: **21157197.1**

(22) Date of filing: **15.02.2021**

(51) International Patent Classification (IPC):
*H02J 3/16* (2006.01)       *H02J 3/18* (2006.01)
*H02J 3/38* (2006.01)       *H02J 3/30* (2006.01)
*F03D 7/02* (2006.01)       *F03D 7/04* (2006.01)
*F03D 9/12* (2016.01)

(52) Cooperative Patent Classification (CPC):
**H02J 3/16; H02J 3/1885; H02J 3/381;**
F03D 7/0284; F03D 7/048; F03D 9/257;
F05B 2270/337; H02J 3/30; H02J 2300/28

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Gamesa Renewable Energy
A/S
7330 Brande (DK)**

(72) Inventor: **The designation of the inventor has not
yet been filed**

(74) Representative: **Aspacher, Karl-Georg
Siemens Gamesa Renewable Energy GmbH & Co.
KG
Otto-Hahn-Ring 6
81739 München (DE)**

(54)  **WIND TURBINE FARM AND METHOD FOR OPERATING**

(57)    In first aspect, a method of operating a wind turbine farm is provided. The wind farm comprises a plurality of wind turbines, a respective circuit breaker, a synchronous condenser and a synchronous condenser circuit breaker. The synchronous condenser and the plurality of wind turbines are connected to the common connection point by closing the synchronous condenser circuit breaker and respective wind turbine circuit breakers, respectively. The grid voltage is measured at the common connection point and the measured voltage compared with a predetermined normal operation voltage range. If the measured grid voltage is out of the predetermined normal operation voltage range, the plurality of wind turbines are disconnected from the common connection point by opening each wind turbine circuit breaker. The synchronous condenser is maintained connected to the common connection point by keeping the synchronous condenser circuit breaker closed. A wind farm and a computer program are also provided.

FIG 2

EP 4 044 388 A1

**Description**

Field of invention

The present invention relates to wind turbine farms and methods, more precisely to wind turbine farms and methods to operate during grid faults.

Background of the invention

Wind turbine generators have for long been connected to electrical systems or the grid adhering to standards and codes imposed by the requirement of the electrical system or the grid operator.

Likewise, a plurality of wind turbine generators may be aggregated or connected in wind turbine farms. A wind turbine farm is also referred to as a wind farm or a wind park. Such connection of a wind turbine generator to an electrical system or grid is also faced with requirements or standards.

There is a need to generally improve utilisation of wind turbine generators and farms and to improve their interaction with the grid.

In particular, there is a long felt need to improve or provide alternative methods and systems to enable and/or facilitate the wind farms to meet the grid operator requirements during grid fault events such as voltage dips, voltage drops, etc.

Summary of the invention

In first aspect, a method of operating a wind turbine farm is provided. The wind farm comprises a plurality of wind turbines and a synchronous condenser. Each of the plurality of wind turbines are connected to a common connection point by a wind turbine circuit breaker. The circuit breakers are configured to connect/disconnect their respective wind turbine from the common connection point. The synchronous condenser is connected to the common connection point via a synchronous condenser circuit breaker. The synchronous condenser circuit breaker is configured to connect/disconnect the synchronous condenser from the grid. The common connection point being coupled to the grid.

Firstly, the synchronous condenser and the plurality of wind turbines are connected to the common connection point by closing the synchronous condenser circuit breaker and respective wind turbine circuit breakers, respectively. The grid voltage is measured at the common connection point, and the measured grid voltage compared with a predetermined normal operation voltage range. If the measured grid voltage is out of, e.g. below the predetermined normal operation voltage range the plurality of wind turbines are disconnected from the common connection point by opening each wind turbine circuit breaker. The synchronous condenser is maintained connected to the common connection point by keeping the synchronous condenser circuit breaker closed.

Having the synchronous condenser connected to the common connection point, and thus to the grid, during a grid fault enables injecting power, i.e. reactive and/or active, to the grid. The active power from the synchronous condenser may provide frequency support while the reactive power provides voltage support. Thus, the wind turbine farm is able to meet the grid code requirements regarding frequency and voltage support.

In addition, by having the plurality of wind turbines disconnected from the grid for a transient period of time during a grid fault and the synchronous condenser connected to the grid during a grid fault, provides robust operation of the grid during e.g. voltage events such as low voltage and "zero voltage" events, as the wind turbine farm may continue injecting or providing power to the grid.

Moreover, by maintaining the synchronous condenser connected to the grid upon detecting a grid fault greatly simplifies the aggregated wind turbine farm response thereby enabling fulfilling the grid operator requirements and also providing stability to the grid. The inertia from the synchronous condenser may be used to stabilise frequency. The frequency support depends on the inertia constant H, which may be defined for the synchronous condenser as:

$$H \; = \; [\mathrm{MWs}] \; / \; [\mathrm{MVA}] \; = \; \tfrac{1}{2} J\omega^2 / \mathrm{MVA};$$

wherein J is the moment of inertia, $\omega$ is the angular speed and MVA is the apparent power of the synchronous condenser.

Therefore, the voltage events can be mitigated for periods over e.g. 100 milliseconds. The synchronous condenser may comprise an automatic voltage regulator (AVR). The AVR may provide support to ride through events as the synchronous condenser also provides reactive power support to the grid.

Synchronous condenser may be selected in the range of 25 - 1300 MVA. In an example a single (large) synchronous condenser may be used. In another example, a synchronous condenser system comprising a plurality of synchronous condensers e.g. a plurality of smaller synchronous condenser (when compared to the examples comprising a single synchronous condenser) may be used. Such synchronous condenser system may comprise the plurality of synchronous condensers arranged in parallel.

In addition, by disconnecting the plurality of wind turbines a sudden shut down or drastic slowdown of the turbines may be avoided. Therefore, mechanical loads and stress may be prevented or at least substantially reduced in the wind turbines. As a result, the lifetime is not shortened due to mechanical stress.

In an example, the method may further comprise measuring a verifying/confirmation voltage of the grid at the common connection point at a predetermined recovery time and comparing the measured verifying voltage with a predetermined recovery voltage range.

In an example, the method may further comprise disconnecting the synchronous condenser from the grid by opening the synchronous condenser circuit breaker, if the measured verifying voltage of the grid is below the predetermined recovery voltage range of the grid. Short-circuits or any other undesired electric events are thus prevented in the wind turbine farm.

In an example, the method may further comprise maintaining the synchronous condenser connected to the grid by keeping closed the synchronous condenser circuit breaker, if the measured verifying voltage of the grid is within the predetermined recovery voltage range of the grid.

In an example, the method may further comprise reconnecting the plurality of wind turbines to the common connection point by closing the respective wind turbine circuit breaker of each of the plurality of wind turbines, at a predefined reconnection time. Thus, in the event of a successful recovery of the grid, the plurality of wind turbines may be ready to inject or supply power to the grid, enabling a fast recovery of normal operation after a grid fault.

In an example, reconnecting the plurality of wind turbines may comprise iteratively reconnecting the plurality of wind turbines to avoid a simultaneous reconnection of the plurality of turbines. The mechanical stress on the wind turbines may thus be substantially reduced which prevents a premature failure and/or a shortening of the lifetime of the wind turbines. In addition, a smoother grid connection transition is enabled.

In an example, reconnecting the plurality of wind turbines may comprise iteratively reconnecting the plurality of wind turbines in a predetermined reconnection sequence or order, thus substantially reducing the mechanical stress on the wind turbines.

In an example, the reconnection sequence or order depends on the wind turbine terminal voltage or on the rotational speed of the rotor of each wind turbine of the plurality of wind turbines.

In an example, disconnecting the plurality of wind turbines from the common connection point may comprise iteratively disconnecting the plurality of wind turbines by iteratively opening the respective wind turbine circuit breaker of each of the plurality of wind turbines. The disconnection process may therefore be reliable and safe.

In a further aspect a wind turbine farm for operating during grid faults is provided. The wind turbine farm comprises a plurality of wind turbines, a plurality of wind turbine circuit breakers, a synchronous condenser, a synchronous condenser circuit breaker and a central controller configured to implement the method according to any of the disclosed examples. The plurality of wind turbines are connected to a common connection point, the common connection point being coupled to the grid. The plurality of wind turbine circuit breakers are configured to selectively connect/disconnect the plurality of wind turbines from the common connection point, wherein each circuit breaker comprises an end coupled to a wind turbine of the plurality of wind turbines and an the other end connected to the common connection point. The synchronous condenser is connected to the common connection point and is configured to provide an amount of apparent power to the grid. The synchronous condenser circuit breaker is configured to selectively connect/disconnect the synchronous condenser from the common connection point. The synchronous condenser circuit breaker comprises an end coupled to the synchronous condenser and the other end connected to the common connection point.

By using wind turbine circuit breakers, a sudden shut down of the wind turbines may be prevented in case of a grid fault, that is, there may be no need drastically slow down the wind turbines. Thus, loads and/or stress in the wind turbines which leading to a shortening of lifetime of the turbines, may be avoided.

In addition, by having a synchronous condenser in the wind farm, it helps the plurality of wind turbines to supply power to the grid during normal operation, and moreover, it is possible to continue injecting power to the grid during a grid fault which provides a robust operation during the grid fault. Additionally, the wind farm is enabled to comply the grid code requirements.

Moreover, the synchronous condenser enables strengthening the grid thereby providing a more stable operation from the plurality of wind turbines point of view i.e. they perceive a stronger grid at their terminals.

Furthermore, the use of a synchronous condenser may enable reducing manufacturing costs of the plurality wind turbines. As the wind turbines are not required to provide all the reactive power to the grid they do not need to be dimensioned to do so. Therefore, the size of the cables, the inverter and/or the converter (among other elements) of the wind turbines may not need to be oversized which enables a cost saving.

The synchronous condenser may be configured to supply power within a certain range according to the power rating. Likewise, each wind turbine has a power rating and the plurality of wind turbines together have an aggregate power rating.

In addition, by having a synchronous condenser circuit breaker, the synchronous condenser may, in case of unsuccessful grid recovery, be disconnected from the grid to avoid undesired electric events such as short-circuits that may damage the wind turbine farm.

The wind farm may thus have a robust operation both during normal operation and during a grid fault which renders the operation of the wind farm safe and reliable in despite of the ongoing grid conditions.

In an example, the synchronous condenser may be configured to provide an apparent power rating of less than half of the aggregate apparent power rating of the plurality of wind turbines. During a short period of time the synchronous condenser has current overload capability that helps to fulfil the grid operator requirements, therefore the power generated by the entire wind farm is not required to do so.

In an example, the synchronous condenser may be configured to provide an apparent power rating of less than one-quarter of the aggregate power rating of the wind turbines.

In an example, the synchronous condenser may comprise a flywheel. The flywheel further enables providing support to the grid with a frequency inertia response and a voltage support during an event, e.g. a voltage drop, and during a recovery period. The flywheel may provide further inertia response by the kinetic energy stored in the rotating mass of the rotor of the synchronous condenser. Adding a mass to the rotor may further enhance the grid support by providing more inertia to the power grid, which may also be beneficial during grid faults as the flywheel may support the recovery of the grid after e.g. a voltage drop.

In a further aspect, computer program product is provided. The computer program product comprises instructions to cause the wind turbine farm according to any of the disclosed examples to implement the method according to any of the disclosed examples.

Brief Description of Drawings

Embodiments of the invention will be described in the figures, whereon:

Figure 1          schematically illustrates a wind turbine according to an example;

Figure 2          schematically illustrates a wind farm according to an example;

Figures 3A and 3B          schematically illustrates the wind farm of Figure 2 in different operational stages, according to an example;

Figure 4          schematically illustrates a flow chart of a method for operating a wind turbine farm according to an example;

Figure 5          schematically illustrates a flow chart of a method for operating a wind turbine farm according to an example; and

Figure 6          schematically illustrates the change of the grid voltage after a grid event, according to examples.

Detailed description

The term "normal operation of a wind turbine or a wind turbine farm" shall be understood as the routine running in absence of grid events or grid faults e.g. voltage drop.

The term "grid fault" shall be understood as an event or disturbance which perturbs or alters the normal performance of the grid e.g. voltage and/or frequency deviations outside a normal operating range. Some grid fault events may be voltage dip, voltage drop, Zero Voltage Ride Through (ZVRT), Low Voltage Ride Through (LVRT), etc.

The term "apparent power rating of the synchronous condenser" shall be understood as the sum of a geometric vector addition of the active and reactive power the device is able to generate and/or provide to the grid.

The term "aggregate power rating of the plurality of wind turbines" shall be understood as the sum of the power generated by all the wind turbines, i.e. the addition of the contribution of each of the wind turbines.

The term "voltage at terminals or terminal voltage" shall be understood as the voltage measured at either the low voltage terminals or the high voltage terminals of a wind turbine.

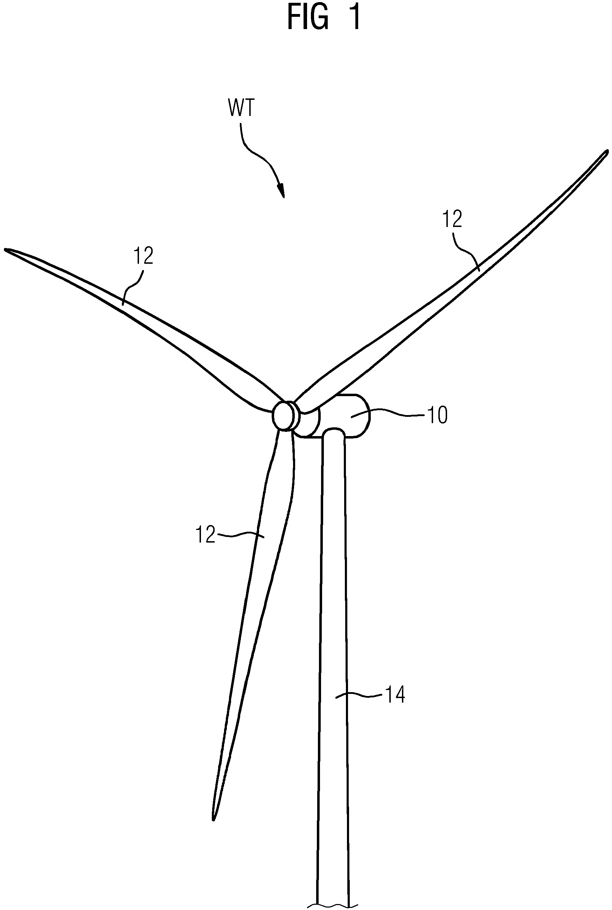

Figure 1 illustrates an exemplary wind turbine WT according to an example.

The wind turbine WT of Figure 1 may comprise a nacelle 10 housing a power generator (not shown). The nacelle 10 may be mounted on a tower 14. Figure 1 discloses a portion of the tower 14. The tower 14 may have any height that facilitates the operation of a wind turbine WT according to any of the examples herein disclosed, and may depend e.g.

on the specific site requirements.

The wind turbine WT may also comprise a rotor hub connected to a plurality, e.g. three, blades 12 extending radially outwardly from the hub for converting the wind energy into rotational energy. The wind turbine WT may have any other number of blades 12 that facilitates operation of the wind turbine WT. The blades may have any length and/or shape The power generator may be coupled to a power converter (not shown), or to a power converter system, that may convert a substantially Direct Current (DC) power output from the power generator to Alternating Current (AC) power. The AC power may be transmitted or injected into an electrical distribution network, i.e. a grid.

In examples comprising a power converter system, the power system may comprise solar panels coupled to form one or more solar arrays. In an example, the power system may comprise s a plurality of solar panels and/or solar arrays coupled together in a series and/or parallel to facilitate generating a desired current and/or voltage output. Each solar panel may comprise one or more photovoltaic panel(s), a solar thermal collector or any other device that converts solar energy to electrical energy e.g. substantially direct current. The solar panel(s) may be coupled to the power converter. The power converter may be configured to adjust the amplitude of the voltage and/or current of the converted AC power to an amplitude suitable for the grid. The power converter may be configured to provide AC power at a frequency and a phase that are substantially equal to the grid frequency and phase. In an example, the power converter may provide three phase AC power. However, the power converter may provide single phase AC power or any other number of phases of AC power.

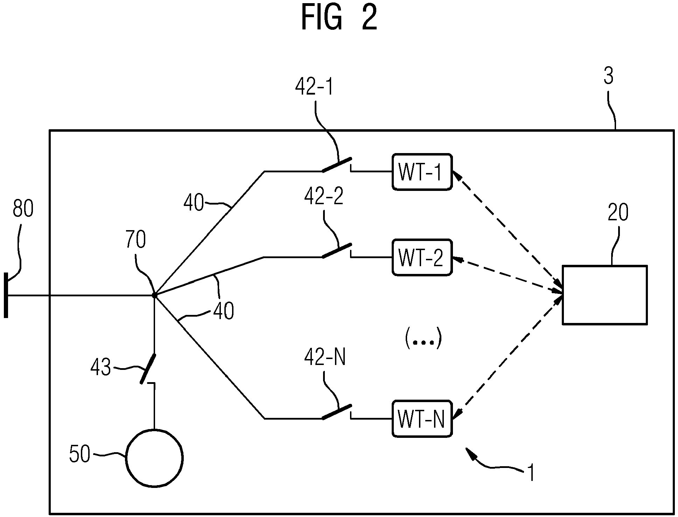

The wind turbine WT according to any of the disclosed examples may be configured to operate in a wind turbine farm 30 (see Figure 2).

Figure 2 shows an example of a wind farm 30 configured to operate during grid faults.

The wind farm 30 may comprise a plurality of wind turbines 1 according to any of the disclosed examples. Herein, WT is used together with a numeral 1,2, ..., N indicating that a wind turbine farm may comprise a plurality, i.e. N, wind turbines WT. Each of the plurality of wind turbines WT-1, ..., WT-N may be connected to a common connection point 70.

The common connection point 70 may be coupled to the grid 80. The wind turbine farm 30 may also comprise a plurality of wind turbine circuit breakers 42-1, ..., 42-N for connecting the plurality of wind turbines to the common coupling point 70. Each of the plurality of wind turbines WT-1, ..., WT-N may be indirectly connected to the common connection point 70, and thus to the grid 80, by a (respective) wind turbine circuit breaker 42-1, ..., 42-N. Each wind turbine circuit breakers 42-1, ..., 42-N may be arranged within or be part of a respective wind turbine.

The number of wind turbine circuit breakers 42-1, ..., 42-N may be equal to the number of wind turbines WT-1, ..., WT-N.

Each wind turbine circuit breaker 42-1, ..., 42-N may have an end coupled to a wind turbine and the other end coupled to the common coupling point 70. The wind turbine circuit breakers 42-1, ..., 42-N may be configured to be selectively opened/closed and therefore, to disconnect/connect the wind turbines from the grid 80. Upon closing such wind turbine circuit breaker, the wind turbine may be connected to the grid. In addition, upon opening a wind turbine circuit breaker, the respective wind turbine may be disconnected from the grid e.g. in the event a grid fault is detected.

The circuit breakers may be commercially available circuit breaker e.g. an electromechanical circuit breaker.

The wind turbine farm 30 may further comprise a synchronous condenser 50. The synchronous condenser 50 may be (indirectly) connected to the common connection point 70, and thus to the grid 80.

A synchronous condenser is a device that comprises a shaft that spins freely, i.e. a spinning machine comprising a certain inherent inertia. The synchronous condenser 50 may be configured to provide an amount of apparent power i.e. the vectorial sum of active and reactive power, to the grid. The kinetic energy stored in the rotating mass of the rotor provides or absorbs active power during frequency deviations on the grid. The active power depends on the rate of change of frequency and on the inertia constant H of the SC rotor. The synchronous condenser may also be configured to mainly provide reactive power when a grid fault occurs.

The synchronous condenser 50 may be configured to provide an apparent power rating of less than half of the aggregate power rating of the plurality of wind turbines 1 during normal operation. In an example, the synchronous condenser 50 may be configured to provide (during normal operation) an apparent power rating of less than one-quarter of the aggregate power rating of the plurality of wind turbines 1.

The synchronous condenser 50 may comprise a local controller (not shown) configured to measure the grid voltage at a common connection point 70 by using a voltage transformer and a sensor e.g. a voltage transducer. The local controller may also be configured to open/close a synchronous condenser circuit breaker (see below).

The synchronous condenser 50 may enable zero-voltage ride through and low-voltage ride through of the wind turbine farm 30 as it may provide voltage support and frequency support.

In an example, the synchronous condenser 50 may comprise an extra mass e.g. a flywheel to its rotating shaft. A flywheel is a mechanical device that adds moment of inertia, J [kgm$^2$] to the synchronous condenser rotor. During operation with flywheel. additional rotational energy is stored in the synchronous condenser rotor for enhanced frequency support.

The flywheel may be arranged in the synchronous condenser shaft wherein it may freely revolve. The flywheel may be made of e.g. metal, composite- or fibre material. In an example, the flywheel may be configured to rotate at the revolution rate of the synchronous speed when directly connected to the shaft, or at a higher revolution speed if the synchronous condenser comprises a gearbox between the shaft and the flywheel.

In an example, the synchronous condenser 50 may be a synchronous condenser system (not shown). The synchronous condenser system may comprise a plurality of synchronous condensers arranged in parallel.

The synchronous condenser 50 may comprise synchronizing device (not shown) having a with a motor to speed up the synchronous condenser. Additionally, the synchronous condenser 50 may comprise a measuring device (not shown) for measuring the grid phase and the synchronous condenser phase. In an example, the local control of the synchronous condenser may compare the grid phase and the synchronous condenser phase, and when both phases are identical, the synchronous condenser circuit breaker may be closed.

The wind farm 30 may further comprise a synchronous condenser circuit breaker 43. The synchronous condenser circuit breaker 43 may be configured to selectively open/close thereby disconnecting/connecting the synchronous condenser 50 from the grid 80. The synchronous condenser circuit breaker 43 may be arranged within or be part of the synchronous condenser.

That is, upon closing the synchronous condenser circuit breaker 43, the synchronous condenser 50 may be connected to the grid. Besides, when opening the synchronous condenser circuit breaker 43, the synchronous condenser 50 may be disconnected from the grid e.g. if after a grid fault the grid voltage is not recovered.

The synchronous condenser circuit breaker 43 may be a commercially available circuit breaker e.g. an electromechanical breaker.

The wind farm 30 may comprise an internal cabling system 40 connecting the plurality of wind turbines 1 to the grid 80 through the common connection point 70. Although a single cable is shown, both the wind farm and the grid may be configured to operate at any number of AC power phases. In an example, the wind farm and the grid are three phase systems. In another example, the wind farm and the grid are single phase systems.

The wind farm 30 may further comprise a central controller 20. The central controller may be connected (see the doted lines) to each of the plurality of wind turbines 1 with wired or wireless connection. The central controller 20 may be configured to manage the operation of the wind farm 3 by sending control signals to each of the plurality of wind turbines 1. Additionally, the central controller 20 may be configured to manage the operation of the wind turbine circuit breakers 42-1, ..., 42-N and of the synchronous condenser circuit breaker 43. The central controller may send instructions, e.g. signals, to each circuit breaker, i.e. to the wind turbine circuit breakers 42-1, ..., 42-N and of the synchronous condenser circuit breaker 43, to selectively open/close them.

In an example, the central controller 20 may be a computerized controller. The central controller 20 may comprise a memory unit (not shown) for storing predetermined ranges, values, look-up tables, etc.

The wind turbine farm 30 may be an offshore or an onshore wind farm.

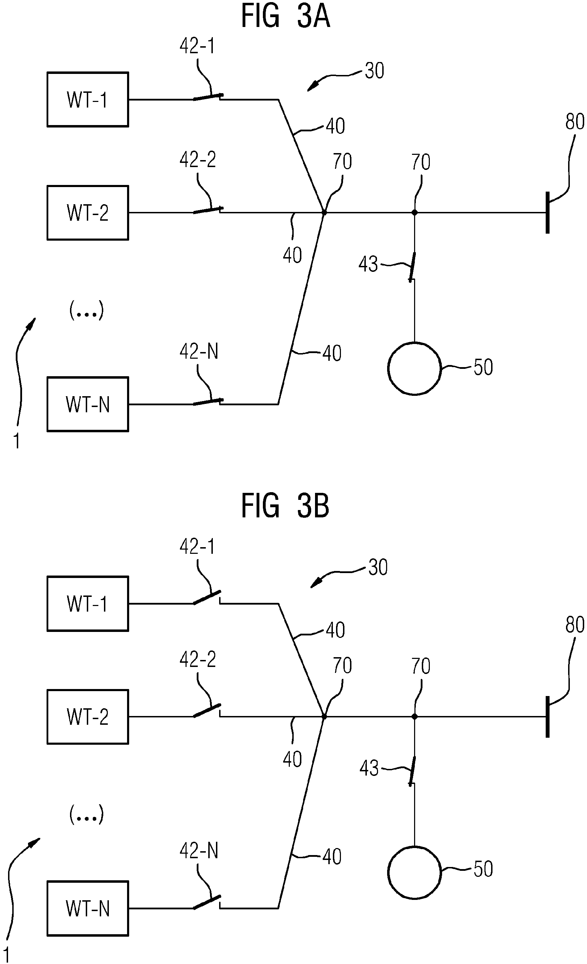

Figures 3A and 3B show different configurations of the wind farm of Figure 2 at different operation stages. Figure 3A depicts the wind farm 30 of Figure 2 during normal operation, i.e. in the absences of a grid event. During normal operation the wind turbine circuit breakers 42-1, ..., 42-N may be closed thereby connecting the plurality of wind turbines 1 to the grid 80. The power generated by each wind turbine WT-1, ..., WT-N may therefore be injected to the grid 80. The total power injected to the grid will be the aggregated power i.e. the sum or contribution of each of the plurality of wind turbines.

In addition, during normal operation the synchronous condenser circuit breaker 43 may also be closed, thereby connecting the synchronous condenser 50 to the grid which adds grid support.

Figure 3B depicts the wind farm 30 of Figure 2 upon detection of a grid fault.

The detection of a grid fault may be carried out by measuring the voltage of the grid at the common connection point 70, e.g. by a sensor, and comparing, e.g. at the central controller, the measured grid voltage with a predetermined normal operation voltage range. If the measured grid voltage is out of the predetermined normal operation voltage range e.g. below, the central controller may determine that a grid fault occurred.

After determining the grid fault, the wind turbine circuit breakers 42-1, ..., 42-N may be opened e.g. following instructions from the central controller, thereby disconnecting the plurality of wind turbines from the grid. A sudden shut down of the wind turbines may therefore be avoided which prevents loads and stress in the components of the wind turbines. That is, the wind turbines may continue operating without a drastic operation change.

The plurality of wind turbines may be reconnected to the grid at a reconnection time e.g. 1 seconds after determining a grid fault. The reconnection may be simultaneous or iterative.

As shown in Figure 3B, upon detection of a grid fault the synchronous condenser 50 may be maintained coupled to the grid, i.e. the synchronous condenser circuit breaker 43 may remain closed. The synchronous condenser 50 may thus provide inertia to the grid which may support recovery of the grid i.e. the recovery of nominal voltage.

If the grid is able to recovery, i.e. to successfully overcome the grid fault, the synchronous condenser 50 may remain connected, otherwise, the synchronous condenser circuit breaker 43 may be opened thereby disconnecting the synchronous condenser 50 from the grid

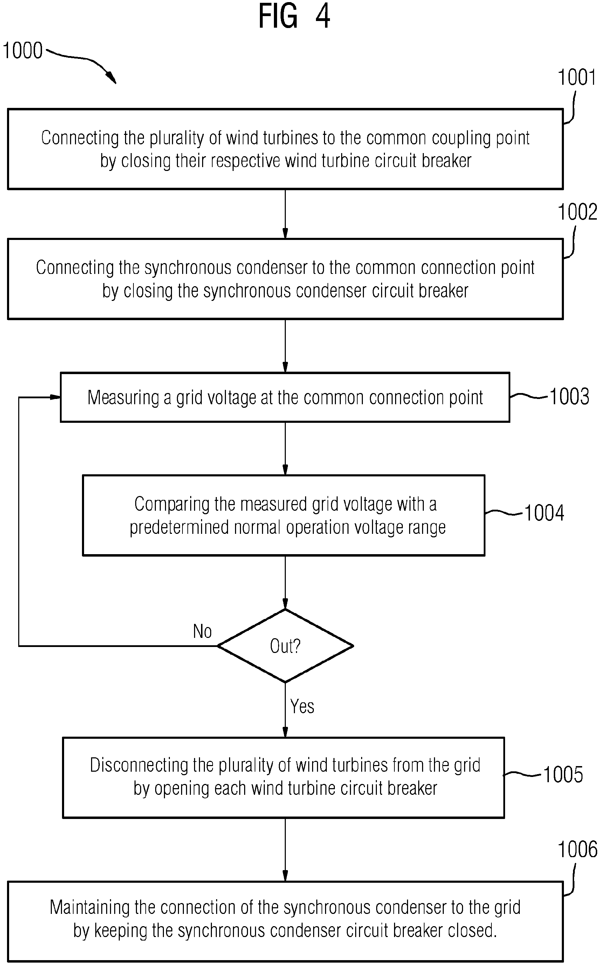

Figure 4 shows a method 1000 for operating a wind farm according to any of the disclosed examples during a grid fault.

Firstly, the plurality of wind turbines may, in block 1001, be connected to the common connection point by closing their respective wind turbine circuit breakers. The power generated by the plurality of wind turbines, i.e. the aggregated power, may therefore be injected to the grid. The synchronous condenser may, in block 1002, be connected to the common connection point by closing the synchronous condenser circuit breaker.

The operation of the wind farm, i.e. operation of the plurality of wind turbines, may then be initialized or started up. The wind turbines may be started up. Besides, and before connecting the synchronous condenser to the grid, it may be synchronized to the grid. To that end, the synchronizing device may speed up the synchronous condenser up to a synchronous speed. Then, the measuring device may measure grid and synchronous condenser phases, upon detecting that the synchronous condenser and grid are in phase, the synchronous condenser circuit breaker may be closed e.g. by the local controller.

While operating the wind farm, the grid voltage may, in block 1003, be measured at the common connection point. The measurement may be done by a central controller of the wind turbine, by a sensor arranged at common connection point or by the local control of the synchronous condenser. The measured grid voltage may, in block 1004, be compared with a predetermined normal operation voltage range.

The predetermined normal operation voltage range may e.g. a voltage around $\pm$ 5% of the nominal grid voltage value. In some examples, the nominal grid voltage may be 10% - 15%.

Such comparison may be carried out by the central controller of the wind farm which may compare the measured grid voltage with a look-up table or values stored in a memory device.

In the event the measured grid voltage is within the normal operation voltage range the wind turbines may continue operating without any operational adjustment or change. On the contrary, if the measured grid voltage is out of the predetermined normal operation voltage range, i.e. a grid fault happened, the plurality of wind turbines may, in block 1005, be disconnected from the common connection point by opening the respective wind turbine circuit breaker each wind turbine. The wind turbine circuit breakers may be opened upon receiving instructions e.g. a signal, from the central controller of the wind farm.

By disconnecting the plurality of wind turbines from the grid, the wind turbines may continue operating without any sudden and/or drastic operation change which may cause loads and stress in the mechanical parts. Thus, failures may be avoided while preventing shortening the life term of the wind turbines.

In an example, the plurality of wind turbines may be disconnected from the common connection point simultaneously.

In an alternative example, the plurality of wind turbines may be disconnected from the common connection point iteratively by iteratively opening the respective wind turbine circuit breaker of each of the plurality of wind turbines. The disconnection of a subsequent wind turbine may be carried out e.g. about 10 - 50 milliseconds after disconnecting the preceding wind turbine. Such disconnection may be based on instructions from a central controller and/or as a function of the voltage at the common connection point.

Besides, the connection of the synchronous condenser to the grid may, in block 1006, be maintained by keeping the synchronous condenser circuit breaker closed. The synchronous condenser may thus support the grid in overcoming the grid fault i.e. to recover the nominal grid voltage.

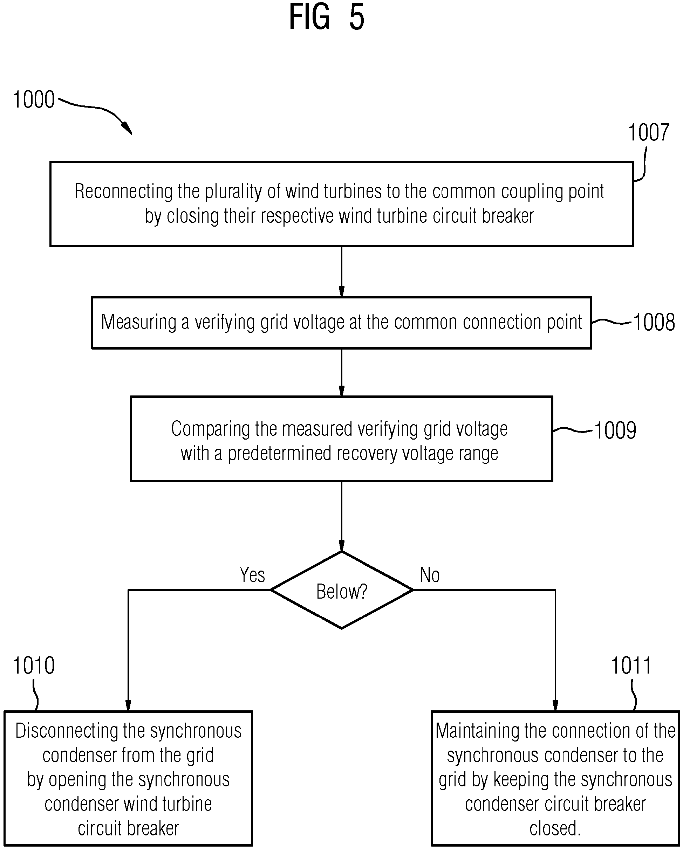

Figure 5 depicts a continuation of method 1000 Figure 5 according to an example.

At a predetermined reconnection time t_rec, i.e. about 0.1 - 5 seconds after the disconnection of the plurality of the wind turbines, the plurality of wind turbines may, in block 1007, be reconnected to the common connection point by closing the respective wind turbine circuit breaker.

In an example, the plurality of wind turbines may be simultaneously reconnected at the predetermined reconnection time t_rec.

In another example, the plurality of wind turbines may be iteratively reconnected to the common connection point. An iterative reconnection may prevent or at least substantially avoided mechanical stress in the wind turbines and also prevent introducing disturbance on the grid. Each wind turbine of the plurality of wind turbines may thus be connected at a particular reconnection times t_rec_WT-1, ..., t_rec_WT-N. The delay in reconnection time from a subsequent wind turbine to a preceding wind turbine to may be about 0.1 - 5 seconds. In such examples, the reconnection time of the first wind turbine t_rec_WT-1 may be equal to the reconnection time t_rec.

In an example, the plurality of wind turbines may be iteratively reconnected in a predetermined reconnection sequence or order. Such sequence may be based or may depend on operational parameters of the plurality of wind turbines. The operational parameters may be the voltage at the terminals of each wind turbine, the rotational speed of the rotor or any other suitable operational parameter.

The operational parameters may be locally measured e.g. by sensors, at each of the plurality of wind turbines and transmitted to the central controller in order to determine the reconnection sequence or order.

In an example, the reconnection order may be based on the decreasing value of the operational parameter, that is, the wind turbine having highest e.g. terminal voltage or rotor speed may be firstly reconnected and the latest wind turbine to be reconnected may be the wind turbine having lowest voltage or rotor speed.

At a predetermined recovery time t_recovery, the grid voltage may, in block 1008, be measured at the common connection point in order to measure a verifying voltage V ver. The verifying voltage V_ver may be a voltage measurement that determines or confirms that the grid fault has been overcame and/or that the grid is successfully recovering from the grid fault, i.e. that the grid is close to get back or to reacquire its nominal voltage.

In an example, the predetermined recovery time t_recovery may be any time after reconnecting the plurality of wind turbines to the common connection point. The predetermined recovery time t_recovery may be set about 3 - 5 seconds after the grid fault.

The measured verifying voltage may, in block 1009, be compared with a predetermined recovery voltage or voltage range V_recovery. The recovery voltage may be indicative of a grid recovery, i.e. that the grid has overcame the grid fault and is close to recover the nominal grid voltage. In an example, the recovery voltage may be about 80% - 100% of the nominal grid voltage. In an example, the recovery voltage may be about 85% - 90% of the nominal grid voltage.

If the measured verifying voltage of the grid is below the predetermined recovery voltage range of the grid V_recovery, i.e. the grid has not recovered from the grid fault, the synchronous condenser may, in block 1010, be disconnected from the grid by opening the synchronous condenser circuit breaker. The synchronous condenser circuit breaker may be opened e.g. after receiving instructions from the central controller.

In an example, in the event the measured verifying voltage of the grid is below the predetermined recovery voltage range of the grid V_recovery but beyond a minimum required grid voltage value, e.g. 10% - 25 % of the nominal value, the synchronous condenser may be maintained connected, in order to support the grid in recovering the nominal value.

In an example, the plurality of wind turbines may be re-disconnected from the common connection point if the measured verifying voltage of the grid is below the predetermined recovery voltage range of the grid V_recovery. That is, both the synchronous condenser and the plurality of wind turbines may be disconnected from the common connection point, and thus from the grid, if the grid does not successfully overcome a grid fault. Short-circuits or any other undesired electrics events (which may damage the elements of the wind farm) may be avoided.

On the contrary, in the event the measured verifying voltage of the grid is not below i.e. it is within or above the predetermined recovery voltage range of the grid V_recovery, the synchronous condenser may, in block 1011, be maintained connected to the common connection point, i.e. an thus to the grid, by keeping closed the synchronous condenser circuit breaker. As it may be considered that either the grid has recovered the nominal grid voltage or the grid is close to recover the nominal grid voltage, there may not be any need to disconnect the synchronous condenser. The plurality of wind turbines and the synchronous condenser may be already connected to the grid, and thus wind farm may thus continue with its normal operation.

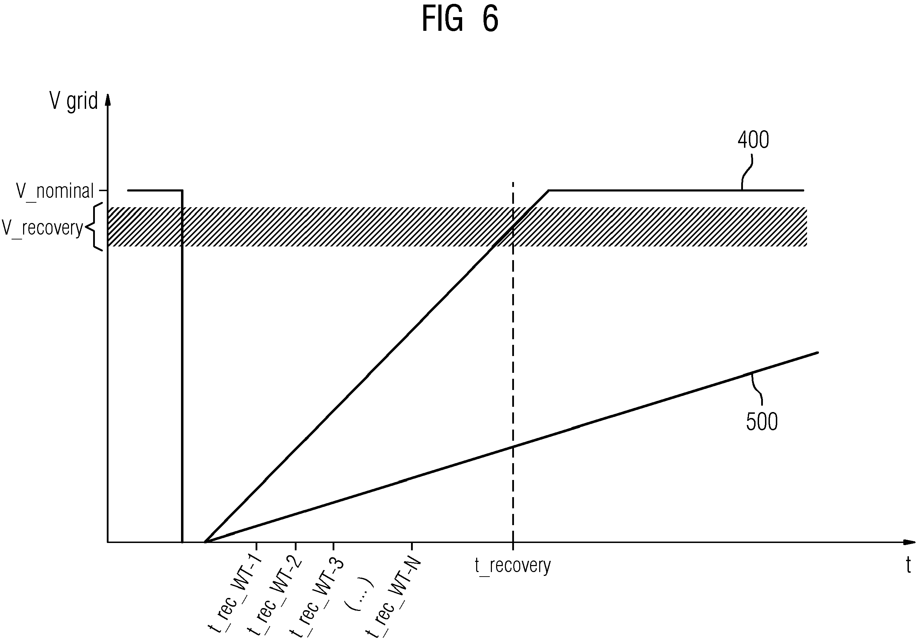

Figure 6 discloses the variation of the grid voltage with respect to time in case of a grid fault in a very schematic manner. As shown in the figure, the grid voltage is at the nominal value until a grid fault occurs. Consequently, the grid voltage decreases from the nominal value to zero or close to zero.

The graph of Figure 6 also shows two different schematic examples of a grid recovery: a first line 400 corresponds to a successful grid recovery and, a second line 500 which illustrates an unsuccessful grid recovery. After a grid fault the grid may gradually recover the nominal value, and depending on the grid conditions such recovery may be faster or slower.

In order to be considered as a successful grid recovery, the grid voltage at a predetermined recovery time t_recovery, e.g. 3 - 5 seconds after the grid fault, may be within or above a predetermined recovery voltage e.g. 85%-90% of nominal grid voltage.

As shown in line 400, the grid voltage at recovery time t_recovery (see the dotted line) is within the recovery range (herein indicated with shadow diagonal stripes), therefore a successful grid recovery may be determined. Thus, the synchronous condenser may be maintained connected to the common connection point.

On the contrary, at recovery time t_recovery, the grid voltage of line 500 is not within the recovery range, thereby the grid recovery may be determined to be unsuccessful. Consequently, the synchronous condenser may be disconnected from the common connection point.

In an example, the predetermined recovery voltage may be a value, i.e. not a range, e.g. 85% of the nominal value. In such examples, in the event the grid voltage is equal to or higher than the recovery voltage, a successful grid recover may be determined. Otherwise, if the grid voltage is below the recovery voltage, the grid recovery may be determined as unsuccessful.

Figure 6 additionally depicts the reconnection time of each of the plurality of wind turbines t_rec_WT-1, ..., t_rec_WT-N in an example wherein the plurality of wind turbines are reconnected in an iterative manner. As shown in Figure 4, all wind turbines of the plurality of wind turbines may be reconnected to common connection point, i.e. and thus, to the grid; before the recovery time. That is, before determining if the grid has successfully overcame the grid fault.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

**Claims**

1. A method for operating (1000) a wind turbine farm (30) during grid fault, the wind farm comprising

   a plurality of wind turbines (1), each of the plurality of wind turbines being connected to a common connection point (70) by a wind turbine circuit breaker, the circuit breakers being configured to connect/disconnect their respective wind turbine from the common connection point (70), and
   a synchronous condenser (50) connected to the common connection point (70) via a synchronous condenser circuit breaker, the synchronous condenser circuit breaker being configured to connect/disconnect the synchronous condenser from the grid
   wherein the common connection point (70) being coupled to the grid (80);

   the method comprising:

   connecting (1001) the plurality of wind turbines and to the common coupling point (70) by closing their respective wind turbine circuit breaker;
   connecting (1002) the synchronous condenser (50) to the common connection point (70) by closing the synchronous condenser circuit breaker;
   measuring (1003) a grid voltage at the common connection point (70);
   comparing (1004) the measured grid voltage with a predetermined normal operation voltage range;
   disconnecting (1005) the plurality of wind turbines (1) from the common connection point (70) by opening each wind turbine circuit breaker, thereby disconnecting the plurality of wind turbines (1) from the grid (80), upon determining that the measured grid voltage is out of the predetermined normal operation voltage range; and
   maintaining (1006) the connection of the synchronous condenser (50) to the common connection point (70) by keeping the synchronous condenser circuit breaker closed, thereby maintaining the synchronous condenser (50) connected to the grid.

2. The method (1000) according to claim 1, further comprising:

   measuring a verifying voltage of the grid (V_ver) at the common connection point (70) at a predetermined recovery time (t_recovery), and
   comparing the measured verifying voltage (V_ver) with a predetermined recovery voltage range (V_recovery).

3. The method (1000) according to claim 2, further comprising:
   disconnecting the synchronous condenser (50) from the grid by opening the synchronous condenser circuit breaker, if the measured verifying voltage of the grid (V_ver) is below the predetermined recovery voltage range of the grid (V_recovery).

4. The method (1000) according to claim 2, further comprising:
   maintaining the synchronous condenser (50) connected to the grid by keeping closed the synchronous condenser circuit breaker, if the measured verifying voltage of the grid (V_ver) is within the predetermined recovery voltage range of the grid (V_recovery).

5. The method (1000) according to any of claims 1 - 4, further comprising:
   reconnecting (1007) the plurality of wind turbines (1) to the common connection point (70) by closing the respective wind turbine circuit breaker of each of the plurality of wind turbines (1), at a predefined reconnection time (t_rec).

6. The method (1000) according to claim 5, wherein reconnecting (1007) the plurality of wind turbines (1) comprises iteratively reconnecting the plurality of wind turbines (1) to avoid a simultaneous reconnection of the plurality of turbines.

7. The method (1000) according to claim 5 or 6, wherein reconnecting (1007) the plurality of wind turbines (1) comprises iteratively reconnecting the plurality of wind turbines (1) in a predetermined reconnection sequence or order.

8. The method (1000) according to claim 7, wherein the reconnection sequence or order depends on the wind turbine terminal voltage (22) or on the rotational speed (25) of the rotor of each wind turbine of the plurality of wind turbines (1).

9. The method (1000) according to any of claims 1 to 8, wherein disconnecting (1005) the plurality of wind turbines (1) from the common connection point (70) comprises iteratively disconnecting the plurality of wind turbines (1) by iteratively opening the respective wind turbine circuit breaker of each of the plurality of wind turbines.

10. A wind turbine farm (30) for operating during grid faults, the wind farm (30) comprising:

   a plurality of wind turbines (1) connected to a common connection point (70), the common connection point (70) being coupled to the grid (80);
   a plurality of wind turbine circuit breakers (42-1, ..., 42-N) configured to selectively connect/disconnect the plurality of wind turbines (1) from the common connection point (70), wherein each circuit breaker (42-1, ..., 2-N) comprises an end coupled to a wind turbine of the plurality of wind turbines (1) and an the other end connected to the common connection point (70);
   a synchronous condenser (50) connected to the common connection point (70), the synchronous condenser (50) being configured to provide an amount of apparent power to the grid (80) ;
   a synchronous condenser circuit breaker (43) configured to selectively connect/disconnect the synchronous condenser (50) from the common connection point (70), wherein the synchronous condenser circuit breaker (43) comprises an end coupled to the synchronous condenser (50) and the other end connected to the common connection point (70); and
   a central controller configured to implement the method according to any of claims 1 to 9.

11. The wind turbine farm (30) according to claim 10, wherein the synchronous condenser (50) is configured to provide an apparent power rating of less than half of the aggregate power rating of the plurality of wind turbines (1).

12. The wind turbine farm (30) according to claim 10 or 11, wherein the synchronous condenser (70) is configured to provide an apparent power rating of less than one-quarter of the aggregate power rating of the plurality of wind turbines (1).

13. The wind turbine farm (1) according to any of claims 10 to 12, wherein the synchronous condenser (50) comprises a flywheel.

14. A computer program product comprising instructions to cause the wind turbine farm according to any of claims 10 to 13 to execute the method according to any of claims 1 to 9.

# FIG 1

# FIG 2

# FIG 3A

# FIG 3B

# FIG 4

1000

**1001**

Connecting the plurality of wind turbines to the common coupling point by closing their respective wind turbine circuit breaker

**1002**

Connecting the synchronous condenser to the common connection point by closing the synchronous condenser circuit breaker

Measuring a grid voltage at the common connection point — 1003

Comparing the measured grid voltage with a predetermined normal operation voltage range — 1004

No ◇ Out? ◇

Yes

Disconnecting the plurality of wind turbines from the grid by opening each wind turbine circuit breaker — 1005

**1006**

Maintaining the connection of the synchronous condenser to the grid by keeping the synchronous condenser circuit breaker closed.

# FIG 5

1000

1007

Reconnecting the plurality of wind turbines to the common coupling point
by closing their respective wind turbine circuit breaker

Measuring a verifying grid voltage at the common connection point — 1008

Comparing the measured verifying grid voltage
with a predetermined recovery voltage range — 1009

Yes — Below? — No

1010

Disconnecting the synchronous
condenser from the grid
by opening the synchronous
condenser wind turbine
circuit breaker

1011

Maintaining the connection of the
synchronous condenser to the
grid by keeping the synchronous
condenser circuit breaker
closed.

# FIG 6

Europäisches
Patentamt

European
Patent Office

Office européen
des brevets

# EUROPEAN SEARCH REPORT

Application Number

EP 21 15 7197

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 080 888 A1 (VESTAS WIND SYS AS [DK]) 19 October 2016 (2016-10-19) | 1,2,10, 14 | INV. H02J3/16 |
| A | * paragraphs [0016] - [0019], [0025], [0029], [0042]; figure 1 * | 3-9, 11-13 | H02J3/18 H02J3/38 |
| Y | EP 2 439 830 A1 (MITSUBISHI HEAVY IND LTD [JP]) 11 April 2012 (2012-04-11) | 1,2,10, 14 | ADD. H02J3/30 |
| A | * paragraph [0002]; claim 1; figure 1 * | 3-9, 11-13 | F03D7/02 F03D7/04 F03D9/12 |
| A | EP 3 723 229 A1 (OERSTED WIND POWER AS [DK]) 14 October 2020 (2020-10-14) * the whole document * | 1-14 | |

TECHNICAL FIELDS
SEARCHED        (IPC)

H02J
F03D

The present search report has been drawn up for all claims

| Place of search | Date of completion of the search | Examiner |
|---|---|---|
| Munich | 5 July 2021 | Sulic, Tomislav |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 21 15 7197

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2021

| Patent document cited in search report | | Publication date | Patent family member(s) | | Publication date |
|---|---|---|---|---|---|
| EP 3080888 | A1 | 19-10-2016 | EP 3080888 | A1 | 19-10-2016 |
| | | | ES 2786185 | T3 | 09-10-2020 |
| | | | US 2016322821 | A1 | 03-11-2016 |
| | | | WO 2015086022 | A1 | 18-06-2015 |
| EP 2439830 | A1 | 11-04-2012 | BR PI0909243 | A2 | 25-08-2015 |
| | | | CA 2717125 | A1 | 05-12-2010 |
| | | | CN 101981779 | A | 23-02-2011 |
| | | | EP 2439830 | A1 | 11-04-2012 |
| | | | JP 5260555 | B2 | 14-08-2013 |
| | | | JP WO2010140247 | A1 | 15-11-2012 |
| | | | KR 20110016858 | A | 18-02-2011 |
| | | | US 2011320052 | A1 | 29-12-2011 |
| | | | WO 2010140247 | A1 | 09-12-2010 |
| EP 3723229 | A1 | 14-10-2020 | EP 3723229 | A1 | 14-10-2020 |
| | | | TW 202110023 | A | 01-03-2021 |
| | | | WO 2020207675 | A1 | 15-10-2020 |

EPO FORM P0459

For more details about this annex : see Official Journal of the European Patent Office, No. 12/82